Europäisches Patentamt

European Patent Office

Office européen des brevets

(11) Veröffentlichungsnummer: **0 107 182**
**A1**

(12) # EUROPÄISCHE PATENTANMELDUNG

(21) Anmeldenummer: 83110473.2

(22) Anmeldetag: 20.10.83

(51) Int. Cl.³: **C 02 F 11/02, C 02 F 3/30**

(30) Priorität: 23.10.82 DE 3239297

(43) Veröffentlichungstag der Anmeldung: 02.05.84
**Patentblatt 84/18**

(84) Benannte Vertragsstaaten: **AT BE CH DE FR GB IT LI LU NL SE**

(71) Anmelder: **Stähler, Hubertus, Mühlenweg, D-6253 Hadamar-Niederzeuzheim (DE)**

(72) Erfinder: **Stähler, Hubertus, Mühlenweg, D-6253 Hadamar-Niederzeuzheim (DE)**

(74) Vertreter: Röbe-Oltmanns, Georg, Dr., Dotzheimer Strasse 61, D-6200 Wiesbaden (DE)

(54) Schlammstabilisierung.

(57) Bei der aeroben Stabilisierung von Fäkalschlämmen in dazu eigens erstellten Anlagen weist der Ablauf noch Verschmutzungsgrade auf, die einem häuslichen Abwasser entsprechen.

Um eine bessere Klärung zu erreichen, wird vorgeschlagen, die Schlämme zu homogenisieren, die in homogenisiertem Schlamm enthaltenen wasserlöslichen Stoffe zu lösen, die organischen Stickstoffverbindungen in anorganische Stickstoffverbindungen, insbesondere Nitride und Nitrate, umzusetzen und anschließend den Schlamm zu stabilisieren.

Anmelder: Hubertus Stähler

Mühlenhof, 6253 Hadamar 2-Niederzeuzheim
----------------------------------------------------------

Verfahren zur Aufbereitung von Fäkalschlämmen
----------------------------------------------------------------

Die Erfindung betrifft ein Verfahren zur Aufbereitung von Fäkalschlämmen aus Mehrkammergruben, Mehrkammerausfaulgruben odgl. oder Gemischen solcher Schlämme und/oder Gemischen mit anderen organisch belasteten Schlämmen oder ähnlichen schlammartigen Abfällen.

Die Aufbereitung von Fäkalschlamm aus Kleinkläranlagen, insbesondere Hauskläranlagen, wie Mehrkammergruben, Mehrkammerausfaulgruben udgl., bereitet erhebliche Schwierigkeiten, weil diese Fäkalschlämme einen hohen Wassergehalt bei hoher Schmutzkonzentration aufweisen und leicht zu Geruchsbelästigungen führen. Sind in erreichbarer Nähe zentrale Kläranlagen vorhanden, z.B. in größeren Städten, ist es zweckmäßig, den Fäkalschlamm dem zentralen Klärwerk zuzuführen und in diesem mitaufzubereiten. In dünnbesiedelten, vor allem ländlichen Gebieten fehlen im allgemeinen jedoch leistungsfähige zentrale Kläranlagen, die in der Lage wären, die in solchen Gebieten anfallenden großen Fäkalschlamm-Mengen aufzunehmen. In solchen Gebieten ist im allgemeinen eine gesonderte Anlage zur Aufbereitung von Fäkalschlämmen erforderlich.

Die aerobe Stabilisierung von Fäkalschlämmen in eigens dazu erstellten Anlagen ist an sich bekannt. Der Ablauf aus einer solchen Anlage weist jedoch noch Verschmutzungsgrade auf, die einem häuslichen Abwasser entsprechen. Auch ist der bauliche Aufwand für eine solche Anlage erheblich.

Aufgabe vorliegender Erfindung ist es, ein Verfahren der eingangs erwähnten Art zu schaffen, bei welchem der bauliche Aufwand für die erforderlichen Anlagen in vertretbaren Grenzen liegt und das behandelte Produkt gegebenenfalls nach einer abschließenden Filtration bzw. Trocknung in der Natur abgelagert bzw. der Verwertung zugeführt werden kann, ohne daß nennenswerte Geruchsbelästigungen auftreten.

Diese Aufgabe wird im wesentlichen durch ein Verfahren der eingangs genannten Art gelöst, bei dem die Schlämme bzw. das Schlammgemisch homogeniert werden, erforderlichenfalls nach vorheriger Stapelung in an sich bekannter Weise und/oder

erforderlichenfalls nach vorheriger Grobklärung in an sich bekannter Weise,

im homogenisierten Schlamm enthaltene wasserlösliche Stoffe gelöst werden,

erforderlichenfalls nach vorheriger Zugabe entsprechender Wassermengen

die im Schlamm enthaltenen wasserlöslichen organischen Stickstoffverbindungen durch Sauerstoff und Aeroben in anorganische Stickstoffverbindungen, insbesondere Nitrite und Nitrate, umgesetzt werden,

der Schlamm dann stabilisiert wird und

der stabilisierte Schlamm in an sich bekannter Weise entwässert wird.

Der Fäkalschlamm aus Kleinkläranlagen, z.B. Mehrkammergruben, Mehrkammerausfaulgruben udgl., hat unterschiedliche Zusammensetzung, abhängig davon, ob es sich um eine Kleinkläranlage für ein Wohnhaus, einen landwirtschaftlichen Betrieb, einen Bewirtungsbetrieb usw. handelt. Um sicherzustellen, daß eine Anlage, in der das Verfahren durchgeführt wird, immer gleichmäßig belastet wird, ist es also erforderlich, die zugeführten Schlämme bzw. Schlammgemische zu homogenisieren. Dies kann in entsprechenden Räumen mittels entsprechender Mischaggregate , z.B. Mischflügel. erfolgen. Fallen die Fäkalschlämme unregelmäßig an, ist es zweckmäßig, sie vor der Behandlung zu stapeln und aus der

0107182

-7-

Stapelung kontinuierlich der Behandlung zuzuführen. Dabei kann der Stapelraum gleichzeitig als Raum dienen, in dem die Homogenisierung erfolgt. Dann, wenn die Fäkalschlämme bzw. Schlammgemische sperrige Gegenstände, Lumpen, Papier odgl. enthalten, sollte vor der Behandlung, z.B. vor der Homogenisierung oder auch unmittelbar nach der Homogenisierung, eine Grobklärung erfolgen, z.B. mittels eines Rechens. Die sperrigen Bestandteile der Schlämme bzw. die Bestandteile der Schlämme, die die nachfolgende Behandlung beeinträchtigen, können auf diese Weise vor der weiteren Behandlung aus den Schlämmen bzw. Schlammgemischen entfernt werden. Die im Schlamm enthaltenen wasserlöslichen Stoffe werden vor der weiteren Behandlung gelöst, um die Umsetzung dieser Stoffe zu erleichtern. Dabei kann erforderlichenfalls eine entsprechende Wassermenge zugegeben werden, um das Lösen zu erleichtern. Das Lösen der wasserlöslichen Stoffe kann nach dem Homogenisieren in einem gesonderten Raum erfolgen. Zweckmäßig ist es jedoch, das Homogenisieren und das Lösen in einem Raum gleichzeitig durchzuführen. Nach dem Lösen der wasserlöslichen Stoffe werden die im Schlamm enthaltenen wasserlöslichen organischen Stickstoffverbindungen durch Sauerstoff und Aeroben in anorganische Stickstoffverbindungen, insbesondere Nitrite und Nitrate, umgesetzt. Der Sauerstoff wird dabei vorzugsweise in Form von Luft in das Wasser eingetragen, z.B. durch Belüftung mittels an sich bekannter Vorrichtungen. Die Aeroben können in Form von Belebtschlamm vorhanden sein. Zweckmäßig ist es jedoch, die Aeroben in Form eines biologischen Rasens zur Behandlung des Schlammes zu verwenden. Ein solcher biologischer Rasen kann z.B. auf umlaufende Scheiben aufgewachsen sein, die teilweise nach oben aus dem Schlamm herausragen. Vorteilhaft ist es jedoch, die Belüftungsvorrichtung derart zu gestalten, daß sie gleichzeitig als Bewuchsfläche für den biologischen Rasen dienen kann. Die im Wasser gelösten organischen Stickstoffverbindungen werden durch die Aeroben in Nitrite und Nitrate, also in Stickstoffdüngemittel, umgewandelt. Um zu vermeiden, daß der Ablauf anorganische Stickstoffverbindungen, insbesondere Nitrite und Nitrate, in einer Menge enthält, die das Wachstum der Pflanzen in den Gewässern,in die der Ablauf fließt, zu stark fördert, ist es möglich, die Belüftung des Schlammes für einen Zeitraum zu unterbrechen, indem zuerst die Aeroben die im Wasser gelösten Sauerstoff verbrauchen und dann die im Schlamm vorhandenen Anaeroben den Sauerstoff aus den Nitriten und Nitraten entnehmen, so daß diese in gasförmige, aus dem Schlamm entweichende Stickstoffverbindungen umgewandelt werden. Dabei ist es möglich, die Umsetzung der organischen Stickstoffverbindungen in anorganische, im Schlamm gelöste Stickstoffverbindungen und die Umwandlung der anorganischen Stickstoffverbindungen in gasförmige, aus dem Wasser entweichende Stickstoffverbindungen in einem Raum dadurch durchzuführen, daß die Belüftung des Schlammes in diesem Raum für einen entsprechenden Zeitraum unterbrochen wird. Es ist jedoch auch möglich, für die beiden Umsetzungen zwei einander nachgeschaltete Räume vorzusehen und den Schlamm im ersten Raum zu belüften, während er im zweiten Raum unbelüftet bleibt. Unbelüftet soll der Schlamm jedoch nur für einen Zeitraum bleiben, der ausreicht, die Nitrite und Nitrate durch Anaeroben in gasförmige, aus dem Schlamm entweichende Stickstoffverbindungen umzusetzen. Bleibt der Schlamm für einen längeren Zeitraum unbelüftet, nehmen die Anaeroben den erforderlichen Sauerstoff aus anderen sauerstoffhaltigen Verbindungen, insbesondere sauerstoffhaltigen, angelagerten Phorphorverbindungen. Der Phosphor geht dann in im Wasser gelöste Verbindungen über und bleibt nicht mehr an den Mikroorganismen gebunden. Er wird also mit dem Ablauf abgeführt, was wiederum zu einer Überdüngung der Gewässer, in die der Ablauf fließt, jetzt jedoch durch Phosphorverbindungen führen kann. Nach der Umsetzung der organischen Stickstoffverbindungen in im Wasser gelöste anorganische Stickstoffverbindungen, insbesondere Nitrite und Nitrate, und nach der Umsetzung der im Wasser gelösten anorganischen Stickstoffverbindungen in gasförmige, aus dem Schlamm entweichende wird der Schlamm stabilisiert. Die Stabilisierung erfolgt dabei insbesondere durch Belüftung. Durch die Belüftung wird dem

0107182

-9-

Schlamm Sauerstoff zugeführt, so daß die Aeroben wirksam bleiben und die organischen Stoffe abbauen, insbesondere die fäulnisfähigen. Die Stabiliserung des Schlammes kann dabei bis zum für die Verwertung gewünschten Grad der Verwesung oder Verrottung oder Mineralisierung erfolgen.

Vorausgesetzt, der Schlamm ist frei von Giftstoffen, wie z.B. bestimmten Schwermetalloxiden, kann das erhaltene Produkt, insbesondere wenn es bis zur Stichfestigkeit filtriert und zweckmäßig bis zur Krümeligkeit getrocknet ist, in der Landwirtschaft zur Düngung der Äcker benutzt werden. In diesem Fall soll der Schlamm bis zur Verwesung der fäulnisfähigen Stoffe belüftet werden. Das erhaltene Produkt ist dann wertvoller Humus.

Abhängig von der Zusammensetzung des Ursprungsschlamms und vorausgesetzt, der Schlamm enthält keine nichtverwesenden Giftstoffe, ist es aber auch möglich, einen solchen Schlamm als Futtermittel für Tiere, insbesondere Fische, zu verwerten. In diesem Fall soll der Schlamm bis zur Verwesung der verwesungsfähigen organischen Giftstoffe belüftet werden.

Enthält der Schlamm jedoch nichtverwesende oder nichtverrottende Giftstoffe, z.B. Schwermetalle oder deren Verbindungen, die sich bei einer Verwesung nicht in gasförmige Stoffe, die als solche entwichen, überführen lassen, ist es zweckmäßig, soweit wirtschaftlich vertretbar, den Schlamm bis zur praktisch vollständigen Verwesung und Mineralisierung, also bis zur praktisch vollständigen Mineralisation, zu belüften.

Um die Behandlung ohne Schwierigkeiten durchführen zu können, sollte der Schlamm nicht mehr als bis zu 10 Gew.% Feststoffe enthalten.

Die Umsetzungen und die Belüftung werden vorzugsweise im Temperaturbereich von etwa 0 bis 80°C durchgeführt. Als zweckmäßig erwies sich dabei der thermophile Tmeperaturbereich, also der Temperaturbereich von etwa 40 bis 80°C. Es kann von Vorteil sein, die Umsetzungen und die Belüftung nacheinander zuerst mesophil im Temperaturbereich von etwa 0 bis 45°C durchzuführen und dann thermophil im Temperaturbereich von etwa 40 bis 80°C. Dabei können die beiden Behandlungsstufen in zwei hintereinander geschalteten Becken erfolgen. Zur thermophilen Behandlung kann der Schlamm aufgeheizt werden. Erfolgt jedoch die Umsetzung, Verwesung, Verrottung oder Mineralisierung unter Entwicklung von Wärme, die ausreicht, den Schlamm auf den thermophilen Behandlungsbereich aufzuheizen, erübrigt sich eine zusätzliche Behandlung.

Enthält der Schlamm noch Nitrate und Nitrite oder sonstige Stickstoff-Verbindungen in einem Umfange, die dort, wo der Schlamm abgelagert oder verwertet wird bzw. wohin der Ablauf fließt, zum Nachteil führen können, ist es mögliche, nach der Stabilisierung den Schlamm für einen zur Überführung von Nitraten und Nitriten sowie sonstigen Stickstoff-Verbindungen in gasförmige Stickstoff-Verbinungen ausreichenden Zeitraum unbelüftet zu lassen und den Schlamm erst dann weiterzuverarbeiten.

Damit der Transport des belüfteten Schlammes ohne unverhältnismäßig großen Aufwand möglich ist, sollte nach der Stabilisierung der Schlamm bis zur Stichfestigkeit filtriert werden. Soll der Schlamm in der Landwirtschaft als Düngemittel verwandt werden, ist es zweckmäßig, ihn bis zur Krümeligkeit zu trocknen.

Zur Durchführung des Verfahrens können Vorrichtungen dienen, wie sie in den deutschen Offenlegungsschriften DE-OS 25 44 177, 26 38 665, 27 27 991, 28 22 347, 29 11 975 udgl. beschrieben sind, gegebenenfalls nach Umgestaltung auf die Behandlung von Schlamm.

P a t e n t a n s p r ü c h e

1. Verfahren zur Aufbereitung von Fäkalschlämmen aus Mehrkammergruben, Mehrkammerausfaulgruben odgl. oder Gemischen solcher Schlämme und/oder Gemischen mit anderen organisch belasteten Schlämmen oder ähnlichen schlammartigen Abfällen,
d a d u r c h   g e k e n n z e i c h n e t ,   daß die Schlämme bzw. das Schlammgemisch homogenisiert werden, erforderlichenfalls nach vorheriger Stapelung in an sich bekannter Weise und/oder
erforderlichenfalls nach vorheriger Grobklärung in an sich bekannter Weise,
im homogenisierten Schlamm enthaltene wasserlösliche Stoffe gelöst werden,
erforderlichenfalls nach vorheriger Zugabe entsprechender Wassermengen,

die im Schlamm enthaltenen wasserlöslichen organischen Stickstoffverbindungen durch Sauerstoff und Aeroben in anorganische Stickstoffverbindungen, insbesondere Nitrite und Nitrate, umgesetzt werden,
der Schlamm stabilisiert wird und
der stabilisierte Schlamm in an sich bekannter Weise entwässert wird.

2. Verfahren nach Anspruch 1, dadurch gekennzeichnet, daß gleichzeitig die Schlämme bzw. das Schlammgemisch  homogenisiert und die in den Schlämmen bzw. Schlammgemischen enthaltenen wasserlöslichen Stoffe gelöst werden.

3. Verfahren nach Anspruch 1 oder 2, dadurch gekennzeichnet, daß zur Eintragung des Sauerstoffs das Wasser belüftet wird.

0107182

-2-

4.    Verfahren nach einem der Ansprüche
1 bis 3,
dadurch gekennzeichnet, daß die Aeroben einen biologischen
Rasen bilden.

5.    Verfahren nach einem der Ansprüche
1 bis 4,
dadurch gekennzeichnet, daß die Sauerstoffzufuhr zum anorganische Stickstoffverbindungen, insbesondere Nitrite und/
oder Nitrate, enthaltenden Schlamm bis zur Umsetzung der
anorganischen Stickstoffverbindungen, insbesondere Nitrite
und Nitrate, durch Anaeroben in gasförmige, aus dem
Schlamm entweichende Stickstoffverbindungen unterbrochen
wird.

6.    Verfahren nach Anspruch 5,
dadurch gekennzeichnet, daß die Umsetzung der organischen
Stickstoffverbindungen in anorganische Stickstoffverbindungen, insbesondere Nitrite und/oder Nitrate, und die
Umsetzung der anorganischen Stickstoffverbindungen, insbesondere Nitrite und/oder Nitrate, in gasförmige Stickstoffverbindungen nacheinander in einem Behälter erfolgt.

7.    Verfahren nach Anspruch 5,
dadurch gekennzeichnet, daß die Umsetzung der organischen
Stickstoffverbindungen in anorganische Stickstoffverbindungen, insbesondere Nitrite und/oder Nitrate, und die
Umsetzung der anorganischen Stickstoffverbindungen, insbesondere Nitrite und/oder Nitrate, in gasförmige Stickstoffverbindungen nacheinander in einander nachgeschaltete Behälter erfolgt.

8.    Verfahren nach einem der Ansprüche
1 bis 7,
dadurch gekennzeichnet, daß der Schlamm durch Belüftung
stabilisiert wird.

9.    Verfahren nach Anspruch 8,
dadurch gekennzeichnet, daß der Schlamm bis zum für die
Verwertung gewünschten Grad der Verwesung oder Verrottung
oder Mineralisierung belüftet wird.

10.    Verfahren nach Anspruch 9,
dadurch gekennzeichnet, daß der Schlamm bis zur weitgehen-

0107182

-3-

den Verwesung oder Verrottung der fäulnisfähigen Stoffe belüftet wird.

11. Verfahren nach Anspruch 9, dadurch gekennzeichnet, daß der Schlamm bis zur Verwesung oder Verrottung der fäulnisfähigen Giftstoffe belüftet wird.

12. Verfahren nach Anspruch 9, dadurch gekennzeichnet, daß der Schlamm bis zur weitgehenden Mineralisierung der organischen Stoffe belüftet wird.

13. Verfahren nach Anspruch 1, dadurch gekennzeichnet, daß die Schlämme bzw. das Schlammgemisch bis zu 10 Gew.% Feststoffe enthält.

14. Verfahren nach einem der Ansprüche 1, 5 oder 8, dadurch gekennzeichnet, daß die Umsetzung der im Schlamm enthaltenen organischen Stickstoffverbindungen in anorganische Stickstoffverbindungen insbesondere Nitrite und/oder Nitrate, und/oder die Umsetzung der anorganischen Stickstoffverbindungen, insbesondere Nitrite und/oder Nitrate, in gasförmige Stickstoffverbindungen und/oder die Belüftung im Temperaturbereich von etwa 0 bis 80°C erfolgt.

15. Verfahren nach Anspruch 14, dadurch gekennzeichnet, daß die Umsetzungen und/oder die Belüftung thermophil im Temperaturbereich von etwa 40 bis 80°C erfolgt.

16. Verfahren nach Anspruch 14, dadurch gekennzeichnet, daß die Umsetzungen bzw. die Belüftung zuerst mesophil im Temperaturbereich von etwa 0 bis 45°C und dann thermophil im Temperaturbereich von etwa 40 bis 80°C erfolgt.

17. Verfahren nach Anspruch 16, dadurch gekennzeichnet, daß die mesophile und thermophile Behandlung in zwei einander nachgeschalteten Behältern erfolgt.

18. Verfahren nach einem der Ansprüche 12 bis 17,

dadurch gekennzeichnet, daß der Schlamm nach der Belüftung für einen zur Überführung von anorganischen Stickstoffverbindungen, insbesondere Nitrite und Nitrate, in gasförmige Stickstoffverbindungen ausreichenden Zeitraum unbelüftet bleibt.

        19. Verfahren nach Anspruch 1 oder 8, dadurch gekennzeichnet, daß der Schlamm nach der Stabilisierung bis zur Stichfestigkeit filtriert wird.

        20. Verfahren nach Anspruch 1, 8 oder 19, dadurch gekennzeichnet, daß der Schlamm nach der Stabilisierung bis zur Krümeligkeit getrocknet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | DE-A-2 727 991 (T. STÄHLER)<br><br>* Seite 1, Ansprüche 1,2; Seite 4, Anspruch 23; Seite 10, Zeile 28 - Seite 11, Zeile 16 * | 1,3-6, 8-14, 18,19 | C 02 F 11/02<br>C 02 F 3/30 |
| D,X | DE-A-2 638 665 (T. STÄHLER)<br><br>* Seite 1, Anspruch 1; Seite 9, Zeile 12 - Seite 10, 1. Absatz * | 1,3-6, 8-14, 18,19 | |
| X | DE-A-2 604 014 (MESSER GRIESHEIM)<br>* Seite 3, 1. Absatz - Seite 4, 3. Absatz; Seite 9, 3. Absatz * | 1,15, 16 | |
| A | US-A-3 871 999 (AUTOTROL)<br>* Titelseite, Zusammenfassung * | 7 | **RECHERCHIERTE SACHGEBIETE (Int. Cl. ³)**<br><br>C 02 F |
| A | US-A-3 769 204 (OKLAHOMA STATE UNIVERSITY)<br>* Figur "Primary treatment" * | 1,2 | |

Der vorliegende Recherchenbericht wurde für alle Patentansprüche erstellt.

| Recherchenort<br>DEN HAAG | Abschlußdatum der Recherche<br>24-01-1984 | Prüfer<br>TEPLY J. |
|---|---|---|